# EUROPEAN PATENT APPLICATION

(11) **EP 3 169 051 A1**
(43) Date of publication of application: **17.05.2017**
(21) Application number: 16189403.5
(22) Date of filing: 19.09.2016
(51) Int. Cl.: H04N 5/217, H04N 5/232, H05B 3/84, B60S 1/08

(54) **IMAGING SYSTEM AND OPERATING METHOD THEREOF**

(30) Priority: 12.11.2015 JP 2015221853
(71) Applicant: Toyota Jidosha Kabushiki Kaisha, Toyota-shi, Aichi 471-8571 (JP)
(72) Inventor: HARADA, Hiroshi, Toyota-shi, Aichi 471-8571 (JP); DEMIZU, Yoshifusa, Toyota-shi, Aichi 471-8571 (JP); TAMAOKI, Tomoyasu, Toyota-shi, Aichi 471-8571 (JP); HATAKEYAMA, Hirotaka, Toyota-shi, Aichi 471-8571 (JP)
(74) Representative: TBK

(57) **Abstract**

A camera captures an image of objects outside a vehicle through a window of the vehicle. An image processing unit determines whether a captured image captured by the camera is clear or blurred. A control unit activates a temperature raising unit to raise temperature of a window area which is an area of the window which is included in an imaging range of the camera if the image processing unit determines that the captured image is blurred so as to be in a blurred state. If a blurred state of the captured image is not dissolved by the time when a predetermined period of time elapses since the temperature raising unit is activated, the control unit suspends activation of the temperature raising unit when the predetermined period of time elapses and prohibits subsequent activation of the temperature raising unit.

## Description

### BACKGROUND OF THE INVENTION

### 1. Field of the Invention

The present invention relates to an imaging system mounted to a vehicle and an operating method thereof.

### 2. Description of the Related Art

Systems in which a camera is installed in a vehicle interior to capture an image of objects outside the vehicle through a window are known to date. A driving assistance system mounted to a vehicle assists driving by, for example, detecting a pedestrian or another vehicle around the vehicle by referring to an image captured by an on-vehicle camera through the window and outputting an alert to the driver. If a window area included in an imaging range of the on-vehicle camera is fogged, the on-vehicle camera cannot capture an image of objects outside the vehicle properly. This forces the driving assistance system to stop the driving assistance process based on captured images. It is therefore suitable to prevent or remove the fog on the window or, at least, the window area so that the on-vehicle camera can capture an image of objects outside the vehicle properly.

The document JP 2004-112329 A discloses an imaging system for capturing an image of objects outside the vehicle through the window of the vehicle. The imaging system disclosed in the document JP 2004-112329 A is provided with a hot wire in the window area included in the imaging range of the on-vehicle camera in order to raise the temperature of the window. When it is determined that the window is fogged by referring to an image captured by the on-vehicle camera, the hot wire is used to generate heat so as to remove the fog on the window. Meanwhile, activation of the hot wire is prohibited so as not to use electric power wastefully while the window is not fogged.

It is indeed possible to provide a dedicated fog detection sensor in order to determine whether the window is fogged. On the other hand, as disclosed in the document JP 2004-112329 A, by employing a scheme to determine that the window is fogged by detecting a blurred captured image, there should be no need to provide the dedicated sensor, resulting in lower cost. According to this scheme, however, a blurred captured image is detected even when the window becomes dirty with, for example, mud while the vehicle is traveling. According to the technology of the document JP 2004-112329 A, the hot wire continues to be activated while blurred captured images are being detected. In this kind of situation, because the attached dirt is not removed by heating the window, electric power is consumed wastefully.

### SUMMARY OF THE INVENTION

The present invention addresses this background and a general purpose thereof is to provide a technology for reducing wasteful consumption of electric power in the process of removing the blur on a captured image.

According to the present invention, there are provided an imaging system and an operating method thereof, as specified in the claims.

An imaging system according to an aspect of the present disclosure mounted to a vehicle comprises: a camera configured to capture an image of objects outside the vehicle through a window of the vehicle; a temperature raising unit configured to raise a temperature of at least a window area which is an area of the window which is included in an imaging range of the camera; an image processing unit configured to determine whether a captured image captured by the camera is clear or blurred; and a control unit configured to activate the temperature raising unit to raise the temperature of the window area if the image processing unit determines that the captured image is blurred so as to be in a blurred state. If a blurred state of the captured image is not dissolved by the time when a predetermined period of time elapses since the temperature raising unit is activated, the control unit suspends activation of the temperature raising unit when the predetermined period of time elapses and prohibits subsequent activation of the temperature raising unit. A method of operating the imaging sensor comprises corresponding steps of determining whether a captured image captured by the camera is clear or blurred, activating the temperature raising unit to raise the temperature of the window area if it is determined that the captured image is blurred so as to be in a blurred state, and, if a blurred state of the captured image is not dissolved by the time when a predetermined period of time elapses since the temperature raising unit is activated, suspending activation of the temperature raising unit when the predetermined period of time elapses, and prohibiting subsequent activation of the temperature raising unit.

If the blurred state of the captured image is not dissolved by the time when the predetermined period of time elapses since the temperature raising unit is activated, it is likely that the captured image is blurred due to dirt on the window or, at least, the window area instead of fog or ice coating on the window or, at least, the window area. By prohibiting the subsequent activation of the temperature raising unit according to the above aspect, wasteful consumption of electric power is reduced.

The image processing unit may have a function of determining whether the blurred state of the captured image is dissolved. If the image processing unit determines that the blurred state of the captured image is not dissolved when the predetermined period of time elapses since the temperature raising unit is activated, the control unit prohibits subsequent activation of the temperature raising unit. This can reduce wasteful consumption of electric power.

The image processing unit may have a function of determining whether the blurred state of the captured image is dissolved. If the image processing unit determines that the blurred state of the captured image is dissolved before the predetermined period of time elapses since the temperature raising unit is activated, the control unit may permit, i.e. not prohibit, subsequent activation of the temperature raising unit after the predetermined period of time elapses. By permitting the activation of the temperature raising unit even after the predetermined period of time elapses based on a determination that the captured image is cleared, i.e. the blurred state thereof is dissolved, by activating the temperature raising unit, generation of fog or ice coating on the window can be prevented or removed effectively.

If the image processing unit determines that the blurred state of the captured image is dissolved while the activation of the temperature raising unit is being prohibited, the control unit may cancel prohibition of subsequent activation of the temperature raising unit. By allowing the control unit to immediately return to a state in which it can activate the temperature raising unit when dirt on the window is removed, fog or ice coating on the window that occurs subsequently can be removed by activating the temperature raising unit.

### BRIEF DESCRIPTION OF THE DRAWINGS

Embodiments will now be described, by way of example only, with reference to the accompanying drawings that are meant to be exemplary, not limiting, and wherein like elements are numbered alike in several figures, in which:
Fig. 1 shows an exemplary configuration of an imaging system mounted to a vehicle according to an embodiment;
Fig. 2 shows an exemplary configuration of the processing device shown in Fig. 1;
Figs. 3A and 3B show examples of images captured by the camera shown in Fig. 1;
Fig. 4 is an exemplary flowchart showing an imaging state determination process according to an embodiment;
Fig. 5 is an exemplary flowchart for a temperature raising control according to an embodiment;
Fig. 6 is an exemplary timing chart for the temperature raising control shown in Fig. 5;
Fig. 7 is another exemplary timing chart for the temperature raising control shown in Fig. 5; and
Fig. 8 is another exemplary flowchart for a temperature raising control according to an embodiment.

### DETAILED DESCRIPTION OF THE INVENTION

The invention will now be described by reference to exemplary embodiments. This does not intend to limit the scope of the invention, but to exemplify the invention.

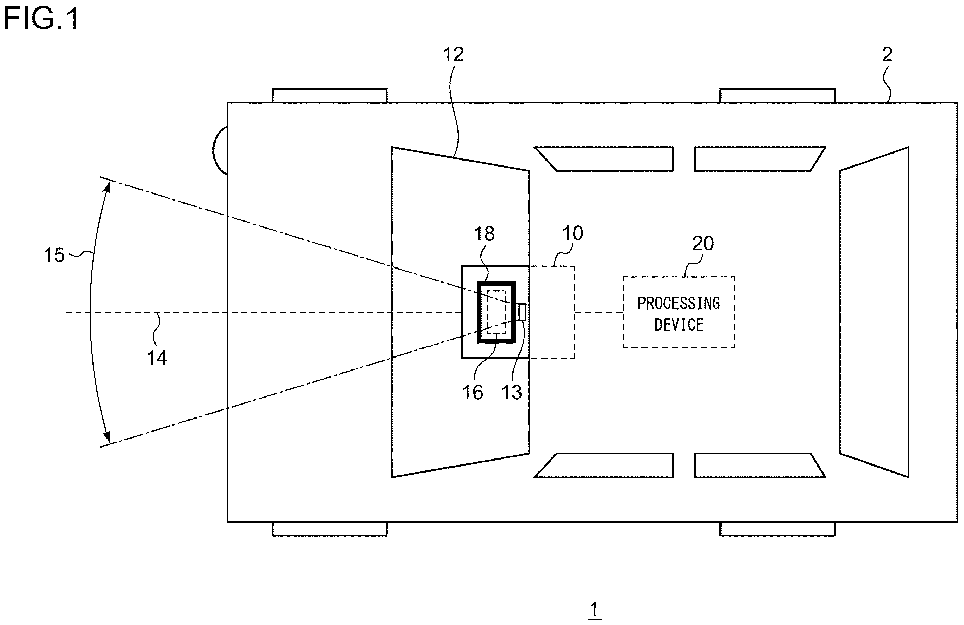

Fig. 1 shows an exemplary configuration of an imaging system 1 mounted to a vehicle 2 according to an embodiment. The imaging system 1 according to an embodiment is provided with a camera 10, a temperature raising unit 18, and a processing device 20. The camera 10 is installed inside the vehicle and captures an image of objects outside the vehicle through a window of the vehicle 2. In the example shown in Fig. 1, the camera 10 captures an image of objects in front of the vehicle 2 through the front window 12. The camera 10 is provided with an imaging device 13 and may be configured, for example, as a monocular camera, stereo camera, or infrared camera. The camera 10 may be provided with an object detection sensor such as a laser sensor in addition to the imaging device 13. In the present example, the housing of the camera 10 may be attached, for example, to the front window 12, the rear-view mirror, or the vehicle ceiling such that a light axis 14 of the imaging device 13 faces a space in front of the vehicle.

The camera 10 captures an image of objects outside the vehicle in a temporally continuous manner (e.g. periodically) and supplies the captured image to the processing device 20. The camera 10, i.e. the imaging device 13, has an imaging range representing or corresponding to a viewing angle for capturing images. In Fig. 1, an imaging range 15 represents a horizontal viewing angle of the imaging device 13. An imaging area 16 represents a window area on the front window 12 included in the imaging range 15 of the camera 10, i.e., an area on the front window 12 imaged by the imaging device 13.

In Fig. 1, a temperature raising unit 18 is exemplarily provided around the imaging area 16 in order to raise the temperature of at least the imaging area 16. For example, the temperature raising unit 18 may be a hot wire that generates heat in response to electric power supplied thereto. The hot wire embodying the temperature raising unit 18 may be formed, for example, on the interior surface of the front window 12 or inside the front window 12. The hot wire embodying the temperature raising unit 18 may also be formed within the imaging area 16, e.g. by using a transparent material, instead of being formed around the imaging area 16. The temperature raising unit 18 may also be provided in the camera 10. For example, the temperature raising unit 18 may be a hot wire provided in the hood of the camera 10 or may be configured to supply hot air to the imaging area 16.

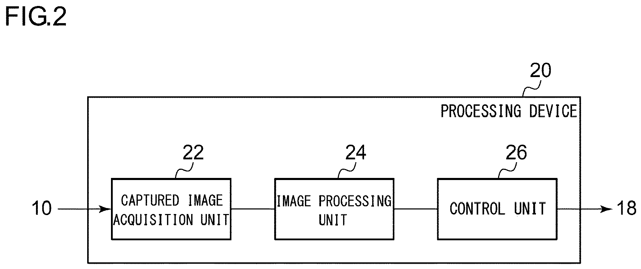

Fig. 2 shows an exemplary configuration of the processing device 20 shown in Fig. 1. The processing device 20 is provided with a captured image acquisition unit 22, an image processing unit 24, and a control unit 26. The elements depicted in Fig. 2 as functional blocks for performing various processes may be implemented by hardware such as circuit blocks, memories or other LSI's (large-scale integration circuits), and/or by software such as programs etc., loaded into the memories. Therefore, it will be obvious to those skilled in the art that the functional blocks may be implemented in a variety of manners by hardware only, software only, or a combination of thereof.

The captured image acquisition unit 22 acquires an image captured by the camera 10 in a temporally continuous manner (e.g. periodically) and supplies the image to the image processing unit 24. In the embodiment, the image processing unit 24 is provided with the function of determining whether the image captured by the camera 10 is clear or blurred. That is, the image processing unit 24 has the function of determining whether the captured image is clear or unclear. The imaging area 16 on the front window 12 is imaged by the imaging device 13. If the imaging area 16 is fogged or is coated with ice (or is dirty), the imaging device 13 cannot capture an image of objects outside properly so that the captured image is blurred.

In the embodiment, the image captured by the camera 10 may be used in a driving assistance process performed by a driving assistance system. The image processing unit 24 may have the function of detecting an object such as a vehicle or a person in the captured image, for the purpose of the driving assistance process. More specifically, the image processing unit 24 detects an edge or a corner included in the captured image as a characteristic point and detects an object included in the captured image by using template matching, for example. The image processing unit 24 may track the characteristic point in a plurality of temporally continuous (e.g. periodically) captured images and detect information such as a speed difference between the object and the driver's vehicle. Based on such information, the driving assistance system performs the driving assistance process such as determining the possibility of collision between the detected object and the driver's vehicle and outputting an alert to the driver. Because characteristic points of a still object such as a structure are extracted from differences in a plurality of captured images, it is suitable that the vehicle 2 travels at a predetermined speed (e.g., 5 km/h) or higher in order to allow the image processing unit 24 to detect characteristic points.

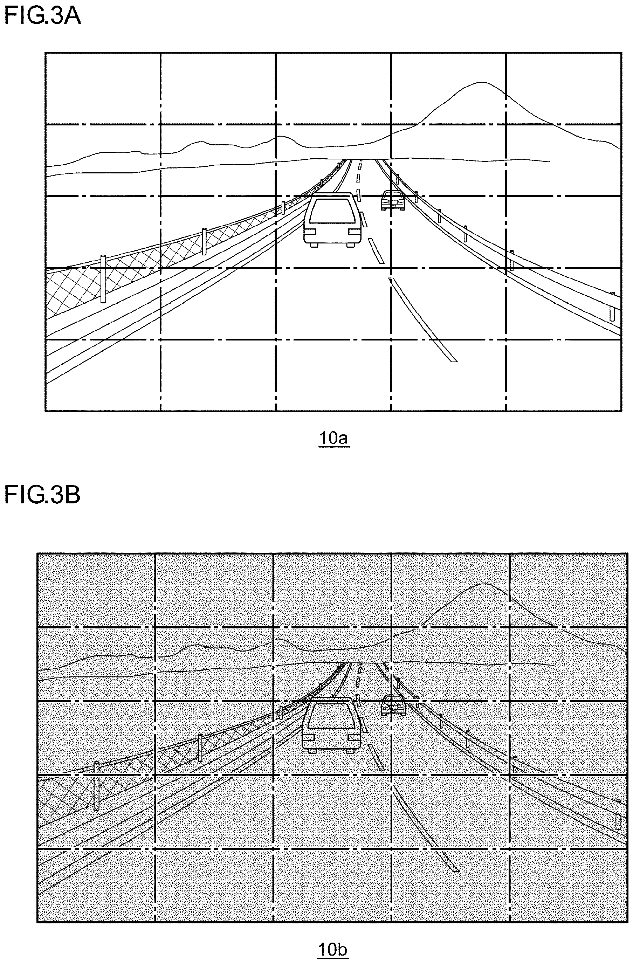

Figs. 3A and 3B show examples of images captured by the camera 10 shown in Fig. 1. A captured image 10a shown in Fig. 3A is properly captured (i.e. "clear"). The image processing unit 24 can detect one or more characteristic points by analyzing the captured image 10a and detects one or more objects included in the captured image. Meanwhile, a captured image 10b shown in Fig. 3B is not captured properly (i.e. "blurred" or in a "blurred state") so that the image processing unit 24 cannot detect a characteristic point properly from the captured image 10b.

In the event that a characteristic point cannot be properly detected in the captured image, the image processing unit 24 according to the embodiment determines that the captured image is unclear or blurred. For example, the image processing unit 24 segments the captured image into a plurality of areas as shown in Figs. 3A and 3B. The image processing unit 24 identifies a segmented area in which a characteristic point can be detected and a segmented area in which a characteristic point cannot be detected. In this example, the captured image is segmented into 25 (5x5) areas. Since the captured image 10a of Fig. 3A is captured properly, the image processing unit 24 can detect characteristic points in all segmented areas. Meanwhile, the captured image 10b of Fig. 3B is not properly captured so that the image processing unit 24 cannot detect a characteristic point in at least some of the segmented areas in the captured image 10b. The image processing unit 24 according to the embodiment determines whether the captured image is clear or blurred in accordance with the number of segmented areas in which one or more characteristic points can be detected and the number of segmented areas in which a characteristic point cannot be detected.

The image processing unit 24 may determine that the captured image is blurred if a characteristic point cannot be detected in a first predetermined proportion (Ru%) or more of the plurality of segmented areas of a captured image or a temporal succession of captured images. The image processing unit 24 may determine that the captured image is blurred if the number of areas in which a characteristic point cannot be detected amounts to 50% or more. If it is determined that the captured image is blurred, the image processing unit 24 turns a blur flag "on".

In this example, the number of segmented areas is 25. Therefore, the image processing unit 24 determines that the captured image is blurred if it cannot detect a characteristic point in 13 or more segmented areas. Meanwhile, if the number of areas in which a characteristic point cannot be detected is less than 50% of the total number of segmented areas, i.e., if the number of areas in which a characteristic point cannot be detected is 12 or less, the image processing unit 24 determines that the captured image is clear.

After determining that the captured image is blurred (or, stated in other words, in a "blurred sate"), the image processing unit 24 determines whether the blurred state is dissolved. If a characteristic point cannot be detected in a second predetermined proportion (RI%) or less of the plurality of segmented areas of a captured image or a temporal succession of captured images, the image processing unit 24 may determine that the blurred state of the captured image is dissolved. Thus, in the embodiment, the image processing unit 24 is provided with the function of determining whether a captured image is clear or blurred, and the function of determining whether the blurred state of the captured image is dissolved. Hereinafter, the process performed by these functions will be referred to as "imaging state determination process". Comparing a determination threshold Ru indicating the first predetermined proportion for determination that a captured image is blurred and a determination threshold RI indicating the second predetermined proportion for determination that the blurred state of the captured image is dissolved, the thresholds are set such that Ru>RI.

If RI and Ru are set to be equal, hunting instability may be induced in the result of determination in the imaging state determination process despite the fact that the state of the window or, at least, the window area remains unchanged. It is therefore suitable to stabilize the result of determination in the imaging state determination process by setting the thresholds such that Ru>RI. For example, the image processing unit 24 determines that the blurred state of the captured image is dissolved if the number of segmented areas in which a characteristic point cannot be detected is 30% or less of the total number of segmented areas. The image processing unit 24 turns the blur flag "off" if it determines that the blurred state of the captured image is dissolved.

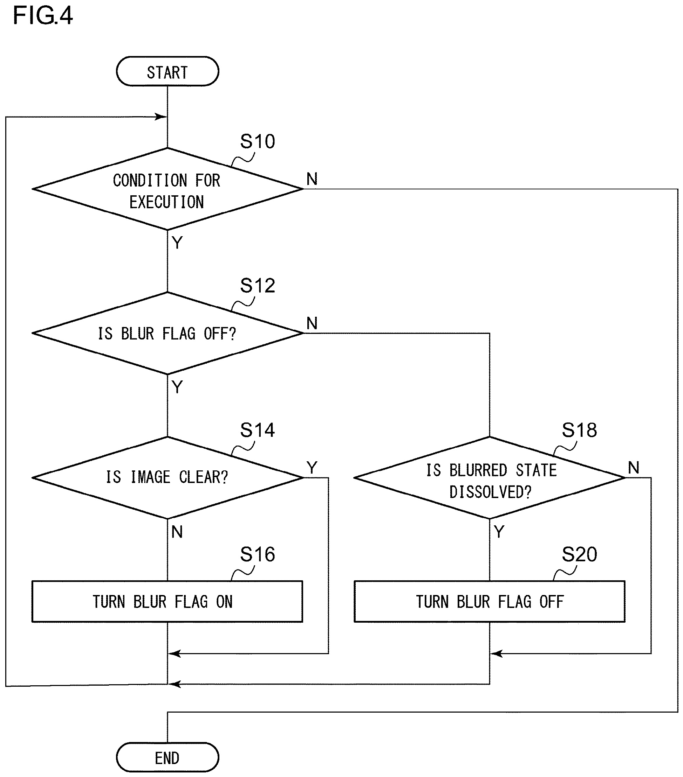

Fig. 4 is an exemplary flowchart showing an imaging state determination process according to an embodiment. The imaging state determination process is executed, by the image processing unit 24, while a condition for execution is fulfilled (Y in S10). The condition for execution at least requires that the start switch of the vehicle 2 is activated to turn ignition (IG) on. Detection of a characteristic point by the image processing unit 24 is suitably executed when the vehicle 2 is traveling at a predetermined speed (e.g., 5 km/h) or higher. Therefore, the imaging state determination process may be executed when IG is on and the vehicle 2 is traveling at a predetermined speed (e.g., 5 km/h) or higher. Initially, the blur flag is set "off".

If the blur flag is off (Y in S12), the image processing unit 24 determines whether the captured image is clear or blurred (S14). For example, if the image processing unit 24 cannot detect a characteristic point in the first predetermined proportion (Ru%) or more of the plurality of segmented areas, the image processing unit 24 determines that the captured image is not clear but blurred (N in S14). For example, if the image processing unit 24 can detect a characteristic point in the first predetermined proportion or more of the segmented areas, the image processing unit 24 determines that the captured image is clear (Y in S14). Upon determining that the captured image is blurred, the image processing unit 24 turns the blur flag on (S16). The image processing unit 24 may determine that the captured image is blurred if it refers to a plurality of successive captured images in time sequence and finds that a characteristic point cannot be detected in the the first predetermined portion (Ru%) or more of the segmented areas on successive occasions.

If the blur flag is on (N in S12), the image processing unit 24 determines whether the blurred state of the captured image is dissolved (S18). For example, If the iimage processing unit 24 cannot detect a characteristic point in the second predetermined proportion (RI%) or less of the total number of segmented areas, the image processing unit 24 determines that the blurred state of the captured image is dissolved or cleared (Y in S18). For example, if the image processing unit 24 cannot detect a characteristic point in more than the second predetermined proportion (RI%) of the segmented areas, the image processing unit 24 determines that the blurred state of the captured image is not dissolved (N in S18). When the image processing unit 24 determines that the blurred state of the captured image is dissolved, the image processing unit 24 turns the blur flag off (S20). The image processing unit 24 may determine that the blurred state of the captured image is dissolved if it refers to a plurality of successive captured images in time sequence and finds that a characteristic point cannot be detected in the the second predetermined portion (RI%) or less of the segmented areas on successive occasions.

The imaging state determination process is executed until the condition for execution is no longer fulfilled (N in S10). The imaging state determination process may be executed periodically to assist the driving based on the captured image. For example, the imaging state determination process may be executed at a period of 1 second or shorter. The imaging state determination process may be executed in conjunction with the process of detecting an object from the captured image. While the captured image is being determined to be blurred and the blur flag is being turned on, the driving assistance process based on captured images should preferably be suspended.

Referring back to Fig. 2, the control unit 26 is notified by the image processing unit 24 of the result of determination as to whether the captured image is clear or blurred. The image processing unit 24 communicates the result of determination in the imaging state determination process e.g. executed at a predetermined period, i.e., the flag value of the blur flag, to the control unit 26. The flag value of the blur flag may be stored in a predetermined memory (not shown) so that the control unit 26 may refer to the flag value stored in the memory in synchronization with the imaging state determination process by the image processing unit 24. The control unit 26 may monitor the flag value of the blur flag continuously.

Generally, fog (or ice) on the window is created when the temperature outside the vehicle is low, the air temperature in the neighborhood of the window drops, and the moisture contained in the air in the neighborhood of the window is released to the window surface. Therefore, when fog (or ice) is created on the window, the control unit 26 activates the temperature raising unit 18 to raise the temperature in the imaging area 16, thereby removing the fog in the imaging area 16 immediately. Similarly, when the window is coated with ice, the control unit 26 activates the temperature raising unit 18 to remove the ice in the imaging area 16. If the temperature raising unit 18 is implemented by a hot wire, the control unit 26 generates heat by inducing an electric current in the hot wire. By setting the activation time of the temperature raising unit 18 to a first predetermined period of time (e.g., 3 minutes) that is sufficient to remove the fog or ice, the fog or ice in the imaging area 16 is removed so that the camera 10 can capture a clear image before the activation of the temperature raising unit 18 is suspended.

Even if the outside temperature is not low, the window may be fogged if the humidity in the vehicle is high due to, for example, rainy weather. This is addressed by the embodiment such that the control unit 26 determines that the vehicle on a trip is in a situation where the window is likely to be fogged if the captured image is determined to be blurred, i.e., if the blur flag is changed from off to on, and controls the temperature raising unit 18 to be alternately activated and deactivated periodically. By using the control unit 26 to control the temperature raising unit 18 to be alternately activated for the first predetermined period of time and deactivated for the second predetermined period of time, the imaging area 16 is prevented from being fogged. This can also reduce power consumption as compared to a case where the temperature raising unit 18 is continuously activated. Hereinafter, control of the temperature raising unit 18 by the control unit 26 will be referred to as "temperature raising control". For example, the control unit 26 may control the temperature raising unit 18 to be alternately activated and deactivated at 3 minute intervals.

However, if the image processing unit 24 determines that the captured image is blurred because of e.g. dirt on the window outer surface in the imaging area 16 (i.e. any cause which cannot be removed by heating), the dirt is not removed by raising the temperature of the imaging area 16 so that the blurred state of the captured image cannot be dissolved by activating the temperature raising unit. Thus, if the camera 10 cannot capture a clear image even after the temperature raising unit 18 is activated for the first predetermined period of time, it is likely that the window is dirty instead of being fogged or coated with ice. For this reason, if the blurred state of the captured image is not dissolved by the time when the first predetermined period of time (e.g., 3 minutes) elapses since the temperature raising unit 18 is activated, the control unit 26 deactivates the temperature raising unit 18 when the first predetermined period of time elapses and prohibits the subsequent activation of the temperature raising unit 18. This can avoid a situation where the temperature raising unit 18 is activated unnecessarily and electric power is consumed wastefully. In this process, the control unit 26 turns an activation prohibition flag "on" so as to ensure that the temperature raising unit 18 cannot be activated while the activation prohibition flag is on. Initially, the activation prohibition flag is set "off". Once the activation prohibition flag is turned "on", the control unit 26 does not activate the temperature raising unit 18 until the time when the activation prohibition flag is changed to "off".

The driver may wipe off dirt on the window outer surface in the imaging area 16 by moving a wiper. When the dirt is wiped off, the camera 10 can capture a clear image so that the image processing unit 24 can suitably detect one or more characteristic points such as an edge or a corner from the captured image. For this reason, if the image processing unit 24 determines that the blurred state of the captured image is dissolved while the activation of the temperature raising unit 18 is being prohibited, the image processing unit 24 turns the blur flag "off". In response to the transition from "on" to "off" of the blur flag, the control unit 26 turns the activation prohibition flag "off". When the activation prohibition flag is turned off, the control unit 26 cancels the prohibition of activation of the temperature raising unit 18, i.e., returns to a state in which the control unit 26 can activate the temperature raising unit 18.

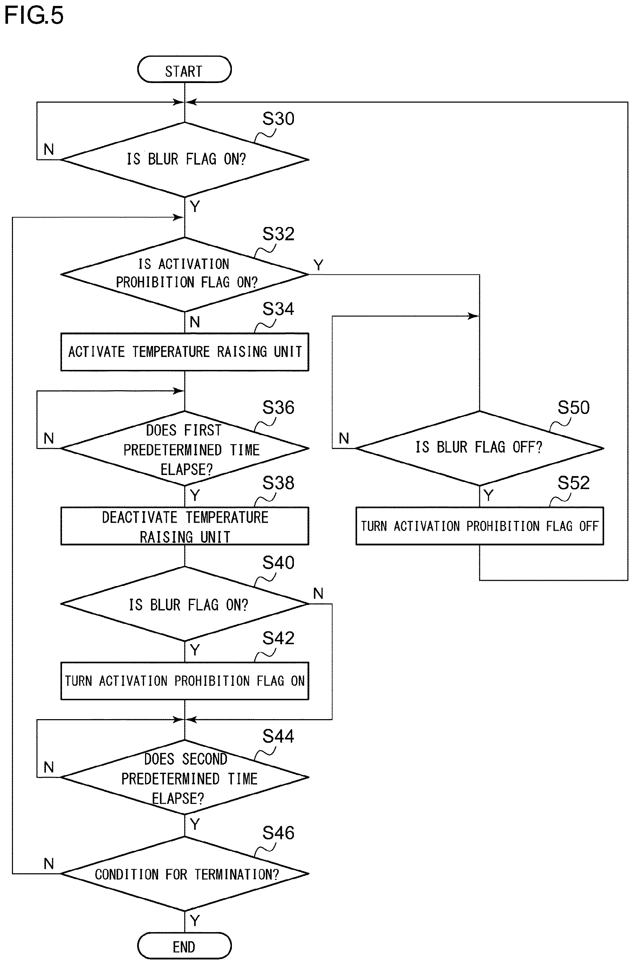

Fig. 5 is an exemplary flowchart for a temperature raising control according to an embodiment. Temperature raising control is started when the start switch of the vehicle 2 is activated to turn ignition (IG) on. Temperature raising control may be started when ignition is on and when the vehicle 2 travels at a predetermined speed (e.g., 5 km/h) or higher. It is suitable that the predetermined speed is set to a level that allows the image processing unit 24 to execute the characteristic point detection process.

The control unit 26 monitors the flag value of the blur flag, and, more specifically, monitors whether a transition from "off" to "on" of the blur flag occurs (S30). Monitoring in S30 is continued while the blur flag is off (N in S30). When the blur flag is turned on (Y in S30), the control unit 26 determines whether the activation prohibition flag is on (S32). If the activation prohibition flag is off (N in S32), the control unit 26 activates the temperature raising unit 18 (S34) so as to raise the temperature in the imaging area 16 of the front window 12. The control unit 26 activates the temperature raising unit 18 until the first predetermined period of time elapses (N in S36).

When the first predetermined period of time elapses since the activation of the temperature raising unit 18 (Y in S36), the control unit 26 deactivates the temperature raising unit 18 (S38) and refers to the flag value of the blur flag at the time when the first predetermined period of time elapses (S40). The step in S40 is an activation determination process for determining whether the temperature raising unit 18 can be activated or not subsequently. It should be noted that the imaging state determination process by the image processing unit 24 and temperature raising control by the control unit 26 are executed based on the same clock. The imaging state determination process is executed periodically. The step of determining whether the first predetermined period of time elapses (Y in S36) and the steps of S38 and S40 are executed when the result of determination in the imaging state determination process is generated. Therefore, the flag value of the blur flag referred to by the control unit 26 indicates the result of determination yielded by the image processing unit 24 when the first predetermined period of time elapses. If the blur flag is turned off, i.e., if the image processing unit 24 determines that the captured image is clear (namely, the blurred state is dissolved) when the first predetermined period of time elapses since the temperature raising unit 18 is activated (N in S40), the control unit 26 knows that the fog or ice on the window is suitably removed and maintains the "off" state of the activation prohibition flag so as to maintain the state in which the temperature raising unit 18 can be activated.

Meanwhile, if the blur flag is on, i.e., if the image processing unit 24 determines that the blurred state of the captured image is not dissolved (namely, the captured image is not cleared but still blurred) when the first predetermined period of time elapses since the temperature raising unit 18 is activated (Y in S40), the control unit 26 turns the activation prohibition flag "on" so as to prohibit the subsequent activation of the temperature raising unit 18 (S42). If the blurred state of the captured image is not dissolved after the temperature raising unit 18 is activated for the first predetermined period of time, it is considered that the imaging area 16 is dirty with, for example, mud. If the imaging area 16 is dirty, the dirt is not removed even if the temperature raising unit 18 is activated. Therefore, the control unit 26 reduces wasteful consumption of electric power by turning the activation prohibition flag on so as to prohibit the subsequent activation of the temperature raising unit 18.

The control unit 26 deactivates the temperature raising unit 18 until the second predetermined period of time elapses (N in S44) after the temperature raising unit 18 is turned to be deactivated. When the second predetermined period of time elapses (Y in S44), control is returned to S32 if the condition for termination is not fulfilled (N in S46). If the condition for termination is fulfilled (Y in S46), temperature raising control by the control unit 26 is terminated. The condition for termination in S46 may require that ignition is turned off. In the flowchart shown in Fig. 5, S46 is illustrated as a step following S44 for convenience. Determination on the condition of termination in S46 can however be made at all times after temperature raising control is started. When the condition for termination is determined to be fulfilled, temperature raising control by the control unit 26 is terminated.

Referring back to S32, the control unit 26 determines whether the activation prohibition flag is on. If the activation prohibition flag is off (N in S32), the control unit 26 executes the process between S34-S44. More specifically, the control unit 26 activates the temperature raising unit 18 for the first predetermined period of time to raise the temperature in the imaging area 16 and deactivates the temperature raising unit 18 for the second predetermined period of time.

If the activation prohibition flag is on (Y in S32), the control unit 26 does not activate the temperature raising unit 18. The control unit 26 monitors the flag value of the blur flag. More specifically, the control unit 26 monitors whether the blur flag makes a transition from "on" to "off" (S50). Monitoring in S50 is continued while the blur flag is on (N in S50). When the blur flag is off (Y in S50), the control unit 26 turns the activation prohibition flag off (S52). More specifically, if the image processing unit 24 determines that the blurred state of the captured image is dissolved while the activation of the temperature raising unit 18 is being prohibited, the control unit 26 cancels the prohibition of activation of the temperature raising unit 18. This returns the control unit 26 to a state in which it can activate the temperature raising unit 18.

In the embodiment, temperature raising control for repeating the activation and deactivation of the temperature raising unit 18 is performed in response to the change of the blur flag from off to on (Y in S30) and a determination that the vehicle on a trip is in a situation where the window is likely to be fogged or frosted. Thus, when the activation prohibition flag is turned on, it is known that the cause for the blurred captured image is other than fog or ice, e.g. dirt attached on the window outer surface. It is unknown whether the vehicle on a trip is in a situation where the window is likely to be fogged or frosted. Therefore, the control unit 26 executes the process of monitoring the blur flag in S30 again after the activation prohibition flag is changed from on to off so as to determine whether the vehicle on a trip is in a situation where the window is likely to be fogged or frosted. Temperature raising control described above is executed until the condition for termination is fulfilled (Y in S46).

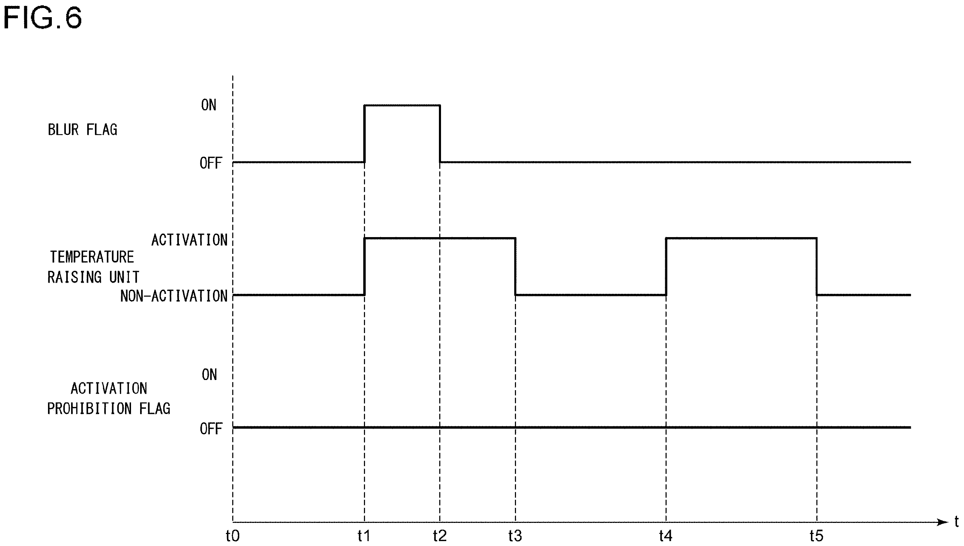

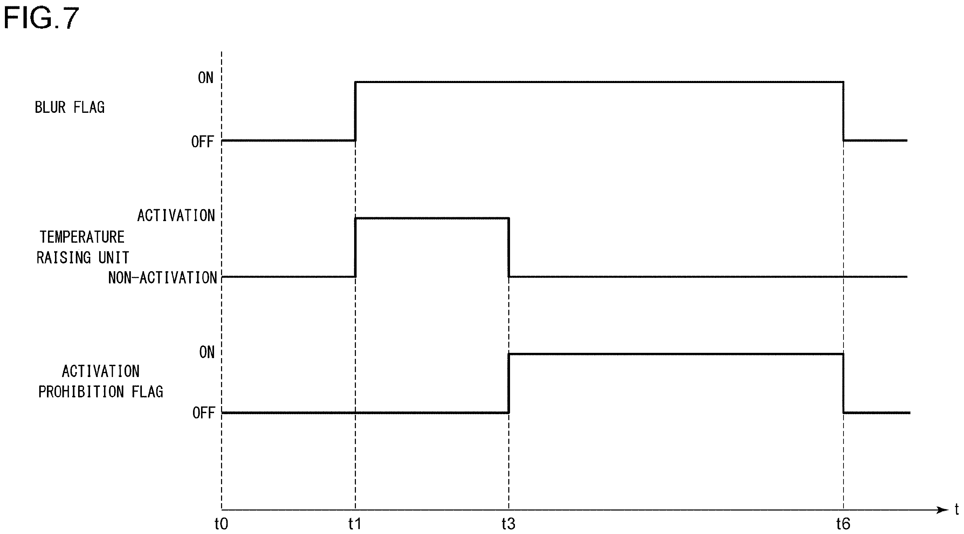

Figs. 6 and 7 are timing charts for the temperature raising control according to an embodiment, as shown in Fig. 5. Fig. 6 is a timing chart in which a clear image is captured by the time when the first predetermined period of time elapses since the temperature raising unit 18 is started to be activated. Fig. 7 is a timing chart in which the blurred state of the captured image is not dissolved by the time when the first predetermined period of time elapses since the temperature raising unit 18 is started to be activated.

A description will now be given of the timing chart of Fig. 6. At time t1, the image processing unit 24 determines that the captured image is blurred and turns the blur flag on. As the blur flag is turned on, the control unit 26 activates the temperature raising unit 18. At time t2, the image processing unit 24 determines that the blurred state of the captured image is dissolved and turns the blur flag off. The control unit 26 activates the temperature raising unit 18 for the first predetermined period of time (t3-t1) and suspends the activation of the temperature raising unit 18 at time t3. The control unit 26 deactivates the temperature raising unit 18 for the second predetermined period of time (t4-t3). After time t4, the control unit 26 activates and deactivates the temperature raising unit 18 periodically.

Referring to the timing chart shown in Fig. 6, the blurred state of the captured image is dissolved at time t2 by raising the temperature in the imaging area 16. Therefore, the activation prohibition flag is not turned on and the control unit 26 can activate the temperature raising unit 18 after time t4.

A description will now be given of the timing chart of Fig. 7. At time t1, the image processing unit 24 determines that the captured image is blurred and turns the blur flag on. As the blur flag is turned on, the control unit 26 activates the temperature raising unit 18. The control unit 26 activates the temperature raising unit 18 for the first predetermined period of time (t3-t1). At time t3, the control unit 26 suspends the activation of the temperature raising unit 18. At time t3, the blur flag is on and the blurred state of the captured image is not dissolved even after the temperature raising unit 18 is activated for the first predetermined period of time. Therefore, the control unit 26 turns the activation prohibition flag on. When the activation prohibition flag is turned on, the activation of the temperature raising unit 18 is prohibited so that the control unit 26 continues to suspend temperature raising control after time t3.

Subsequently, when e.g. dirt on the front window 12 is wiped off by the wiper at time t6, the image processing unit 24 determines that the blurred state of the captured image is dissolved and turns the blur flag off. This causes the control unit 26 to turn the activation prohibition flag off so that the control unit 26 returns to a state in which it can activate the temperature raising unit 18 after time t6. Thus, if the image processing unit 24 determines that the blurred state of the captured image is dissolved while the activation of the temperature raising unit 18 is being prohibited, the control unit 26 cancels the prohibition of activation of the temperature raising unit 18 and is placed in a state in which it can activate the temperature raising unit 18. Thus, by canceling the prohibition of activation of the temperature raising unit 18 once e.g. dirt in the imaging area 16 is removed, the temperature raising unit 18 can be suitably activated when the captured image becomes blurred.

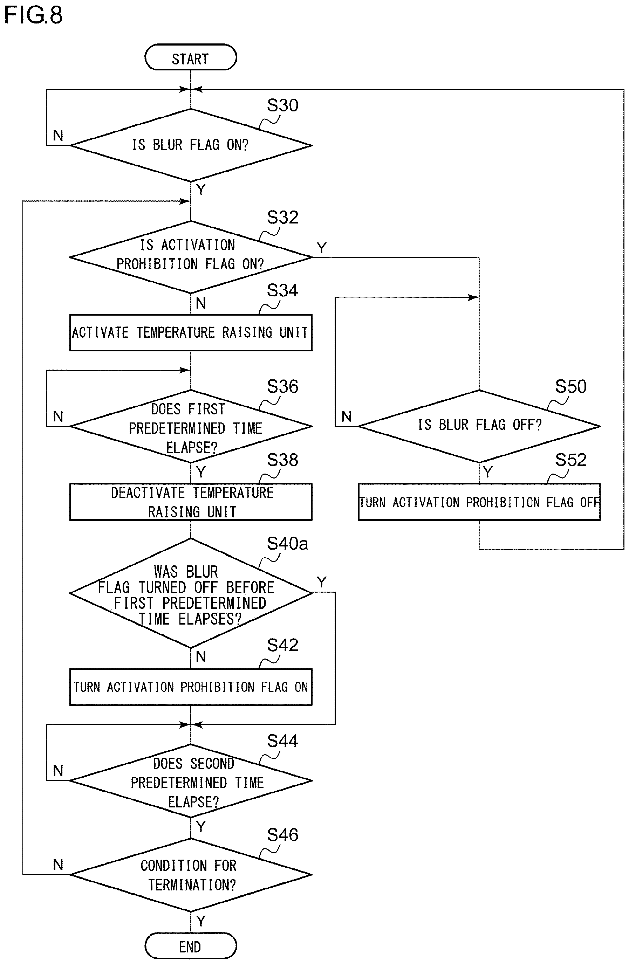

Fig. 8 is another exemplary flowchart for a temperature raising control according to an embodiment, which may be performed by the control unit 26. Compared with the flowchart of Fig. 5, the flowchart of Fig. 8 differs in that the activation determination process of S40 in Fig. 5 is changed to S40a. The other steps remain unchanged.

In the temperature raising control shown in Fig. 8, the control unit 26 activates the temperature raising unit 18 for the first predetermined period of time. After suspending the activation of the temperature raising unit 18, the control unit 26 determines whether the blur flag has been turned off at least once for the first predetermined period of time during which the temperature raising unit 18 is being activated (S40a). More specifically, the control unit 26 determines whether the image processing unit 24 determined that the blurred state of the captured image is dissolved by the time when the first predetermined period of time elapses since the temperature raising unit 18 is activated. As described above, the imaging state determination process by the image processing unit 24 and temperature raising control by the control unit 26 are executed based on the same clock. The imaging state determination process is executed at predetermined intervals until the first predetermined period of time elapses (N in S36). By the time when the first predetermined period of time elapses (N in S36), the control unit 26 refers to the result of determination in the imaging state determination process in synchronization with the clock for generating the result of determination, so as to determine whether the blur flag is turned off. For example, the determination as to whether the first predetermined period of time elapses may be made at the same period as the period for the imaging state determination process. The control unit 26 may refer to the flag value of the blur flag each time that the control unit 26 makes the determination as to whether the first predetermined period of time elapses (Y in S36). When the blur flag is turned off, the control unit 26 stores information indicating that the flag is turned off in a memory (not shown). The control unit 26 may see whether the information indicating that the flag is turned off is stored in the memory when it is determined that the first predetermined period of time elapses (Y in S36) so as to determine whether the blur flag was turned off in the past. Thus, the control unit 26 determines whether the blur flag was turned off in the past before the first predetermined period of time elapses (S40a).

If the image processing unit 24 determines that the blurred state of the captured image was dissolved in the past before the first predetermined period of time elapses since the temperature raising unit 18 is activated (Y in 40a), the control unit 26 maintains the activation prohibition flag "off". Thereby, the control unit 26 maintains the state in which it can activate the temperature raising unit 18 and does not prohibit the activation of the temperature raising unit 18 after the elapse of the first predetermined period of time. This is because it can be determined that the captured image was blurred because of the fog or ice coating on the window instead of the dirt on the window, since the captured image became clear at least once while the temperature raising unit 18 was being activated.

Meanwhile, if the image processing unit 24 cannot determine that the blurred state of the captured image was dissolved in the past before the first predetermined period of time elapses since the temperature raising unit 18 is activated (N in S40a), the control unit 26 turns the activation prohibition flag "on" (S42). If the blur flag is never turned off while the temperature raising unit 18 is being activated, it can be determined that the captured image was blurred because of the dirt on the window. Therefore, the control unit 26 prohibits the subsequent activation of the temperature raising unit 18 and stops the temperature raising control.

It is described above that the control unit 26 prohibits the activation of the temperature raising unit 18 if the blurred state of the captured image is not dissolved by or was not dissolved before the time when the first predetermined period of time elapses since the temperature raising unit 18 became activated. The embodiment is intended to be illustrative only and it will be obvious to those skilled in the art that various modifications to constituting elements and processes could be developed and that such modifications are also within the scope of the present invention.

As described in the embodiment, fog (or ice) on the window is produced as the moisture contained in the air in the neighborhood of the window is released to the window surface when the outside temperature is low. In this respect, the vehicle 2 may be provided with a temperature sensor for measuring the outside temperature, and the control unit 26 may subject the temperature raising unit 18 to temperature raising control by determining that the window is likely to be fogged (or frosted) when the outside temperature measured by the temperature sensor is equal to or lower than a predetermined temperature. In this case, too, the control unit 26 prohibits the activation of the temperature raising unit 18 if the activation prohibition flag is on.

By way of example, the camera 10 according to the embodiment is mounted to the vehicle 2 so as to capture an image of objects in front of the vehicle. Alternatively, the camera 10 may be mounted to the vehicle 2 so as to capture an image of objects in other directions (e.g., objects behind or lateral to the vehicle).
As evident from the above, the present disclosure describes a camera which captures an image of objects outside a vehicle through a window of the vehicle. An image processing unit determines whether a captured image captured by the camera is clear or blurred. A control unit activates a temperature raising unit to raise temperature of a window area which is an area of the window which is included in an imaging range of the camera if the image processing unit determines that the captured image is blurred so as to be in a blurred state. If a blurred state of the captured image is not dissolved by the time when a predetermined period of time elapses since the temperature raising unit is activated, the control unit suspends activation of the temperature raising unit when the predetermined period of time elapses and prohibits subsequent activation of the temperature raising unit.

## Claims

1. An imaging system (1) mounted to a vehicle (2), comprising:
a camera (10) configured to capture an image of objects outside the vehicle through a window (12) of the vehicle;
a temperature raising unit (18) configured to raise a temperature of at least a window area (16) which is an area of the window which is included in an imaging range (15) of the camera;
an image processing unit (24) configured to determine whether a captured image captured by the camera is clear or blurred; and
a control unit (26) configured to activate the temperature raising unit (18) to raise the temperature of the window area if the image processing unit determines that the captured image is blurred so as to be in a blurred state, wherein
if a blurred state of the captured image is not dissolved by the time when a predetermined period of time elapses since the temperature raising unit is activated, the control unit (26) is configured to suspend activation of the temperature raising unit when the predetermined period of time elapses, and to prohibit subsequent activation of the temperature raising unit.

2. The imaging system (1) according to claim 1, wherein the image processing unit (24) comprises a function of determining whether the blurred state of the captured image is dissolved, and
if the image processing unit (24) determines that the blurred state of the captured image is not dissolved when the predetermined period of time elapses since the temperature raising unit is activated, the control unit (26) is configured to prohibit subsequent activation of the temperature raising unit.

3. The imaging system (1) according to claim 1 or 2, wherein
the image processing unit (24) comprises a function of determining whether the blurred state of the captured image is dissolved, and
if the image processing unit (24) determines that the blurred state of the captured image is dissolved before the predetermined period of time elapses since the temperature raising unit is activated, the control unit (26) is configured to permit subsequent activation of the temperature raising unit after the predetermined period of time elapses.

4. The imaging system (1) according to any one of claims 1 to 3, wherein
if the image processing unit (24) determines that the blurred state of the captured image is dissolved while the activation of the temperature raising unit is being prohibited, the control unit (26) is configured to cancel the prohibition of subsequent activation of the temperature raising unit.

5. The imaging system (1) according to any one of claims 1 to 4, wherein
the image processing unit (24) is configured to detect characteristic points in the captured image, and
the image processing unit (24) is configured to determine that the captured image is clear or blurred and/or to determine whether or not the blurred state of the captured image is dissolved depending on a number of characteristic points detected in the captured image.

6. The imaging system (1) according to claim 5, wherein the image processing unit (24) is configured to determine that the captured image is clear if the number of characteristic points detected in the captured image is equal to or larger than a first determination threshold, and
the image processing unit (24) is configured to determine that the blurred state of the captured image is dissolved, after it has been determined that the captured image is blurred, if the number of characteristic points detected in the captured image is equal to or smaller than a second determination threshold,
wherein the first determination threshold is larger than the second determination threshold.

7. A method of operating an imaging system (1) mounted to a vehicle (2), the imaging system (1) comprising:
a camera (10) configured to capture an image of objects outside the vehicle through a window (12) of the vehicle; and
a temperature raising unit (18) configured to raise a temperature of at least a window area (16) which is an area of the window which is included in an imaging range (15) of the camera,
the method comprising:
determining whether a captured image captured by the camera is clear or blurred,
activating the temperature raising unit (18) to raise the temperature of the window area if it is determined that the captured image is blurred so as to be in a blurred state, and
if a blurred state of the captured image is not dissolved by the time when a predetermined period of time elapses since the temperature raising unit is activated, suspending activation of the temperature raising unit when the predetermined period of time elapses, and prohibiting subsequent activation of the temperature raising unit.
